# NEUE EUROPÄISCHE PATENTSCHRIFT

(11) **EP 2 147 286 B2**
(45) Veröffentlichungstag und Bekanntmachung des Hinweises auf die Entscheidung über den Einspruch: **08.04.2020**
(45) Hinweis auf die Patenterteilung: 06.07.2016
(21) Anmeldenummer: 08758007.2
(22) Anmeldetag: 05.05.2008
(51) Int. Cl.: G01G 11/00

(54) **TRANSPORTWAAGE, INSBESONDERE WÄGEFÖRDERER MIT EINEM TRANSPORTBAND**
IN-MOTION SCALES, ESPECIALLY CONVEYOR SCALES COMPRISING A CONVEYOR BELT
BALANCE TRANSPORTEUSE, EN PARTICULIER TRANSPORTEUR PESEUR A COURROIE DE TRANSPORT

(30) Priorität: 04.05.2007 DE 102007021393
(43) Veröffentlichungstag der Anmeldung: 27.01.2010
(73) Patentinhaber: WIPOTEC GmbH, 67657 Kaiserslautern (DE)
(72) Erfinder: WAGNER, Udo, 67680 Neuhemsbach (DE)
(74) Vertreter: Eder, Thomas
(86) Internationale Anmeldenummer: PCT/DE2008/000746
(87) Internationale Veröffentlichungsnummer: WO 2008/135027

(56) Entgegenhaltungen:
- DE-A1-102004 052 432
- DE-T2- 69 409 700
- US-A- 4 977 968
- US-A1- 2003 067 119
- US-A1- 2005 109 580
- US-A1- 2007 089 581

## Beschreibung

Die Erfindung betrifft eine Transportwaage, insbesondere einen Wägeförderer mit einem Transportband, mit den Merkmalen des Oberbegriffs der Ansprüche 1 und 2.

Transportwaagen, beispielsweise Wägeförderer mit einem Transportband. finden unter anderem in der Lebensmittelindustrie Verwendung. Gerade in diesen Fällen spielt die Reinigung der Transportwaagen eine große Rolle, um die geforderte Hygiene bzw. Reinheit der erzeugten Produkte gewährleisten zu können. Dabei sei darauf hingewiesen, dass der Begriff der "Transportwaage" im Verlauf dieser Beschreibung für sämtliche Waagen verwendet wird, die zumindest eine Wägezelle zur Erfassung des Gewichts eines zu wiegenden Guts aufweisen, sowie ein beliebiges Mittel zum Zu- oder Abführen des zu wiegenden Guts zur bzw. von der Wägezelle bzw, in den Punkt oder Bereich einer Wägeplattform, in dem der Wägevorgang durchgeführt wird. Bei dynamischen Transportwaagen wird häufig ein Förderband verwendet, welches mit dem Lastaufnehmer der Wägezelle gekoppelt ist, so dass das Gewicht eines zu wiegenden Guts auf dem Förderband auch während dessen Bewegung ermittelt werden kann. Eine statische Transportwaage kann beispielsweise so realisiert sein, dass mittels einer geeigneten Zuführvorrichtung jeweils ein zu wiegendes Gut auf die Wägeplattform geschoben wird und nach erfolgtem (statischem) Wägevorgang wieder von der Wägeplattform entfernt wird. Das Transportmittel kann also auf vielfältige Weise realisiert sein, beispielsweise als (relativ einfacher) Roboterarm, Schieber oder dergleichen. Sie können wahlweise auf der Wägeplattform oder am Maschinengestell befestigt sein.

Die Reinigung von komplexen oder empfindlichen Produktionsmaschinen, wie beispielsweise hochwertigen Transportwaagen, erfordert in der Regel entsprechend geschultes Personal. Reinigungsvorgänge sind oftmals zeitaufwändig, da die Transportwaage beispielsweise an hierfür vorgesehenen Positionen geöffnet und eine Reinigung von bestimmten Bereichen durchgeführt werden muss.

Werden Transportwaagen, insbesondere Wägeförderer mit wenigstens einer Wägezelle und einem Förderband, in der Lebensmittelindustrie bei der Produktion von Lebensmitteln innerhalb einer Produktionslinie eingesetzt, sind diese häufig so ausgestaltet, dass der Wägeförderer zur Erhöhung der Messgenauigkeit und der Benutzersicherheit weitestgehend abgedeckt ist. Anschließend kann beispielsweise mit einem Dampfstrahlreiniger das Transportband gereinigt werden. Der Reinigungsvorgang erfolgt nach einem stromlos Schalten des Wägeförderers bei stillstehendem Förderband.

Wird die Reinigung der Transportwaage, wie teilweise angewendet, während des Betriebs vorgenommen, so besteht zum einen die Gefahr, dass sich eine Bedienperson durch bewegte Elemente der Transportmittel verletzt oder die Transportwaage beschädigt wird, beispielsweise wenn eine Dampfstrahldüse mit einem bewegten Element der Transportmittel kollidiert.

Aus der US 4,977,968 ist eine Reinigungs-, Wasch- und Trockenvorrichtung für Waagen, insbesondere Kombinationswaagen bekannt, welche ein selbsttätiges Reinigen, Waschen und Trocknen von Aufnahmebehältem für zu wiegendes Gut ermöglicht. Die Reinigungsvorrichtung umfasst dabei einen schwenkbaren Arm, an dessen Ende ein rotierbarer Doppelflügel angeordnet ist, in welchem mehrere Düsen für das flüssige Reinigungsmedium vorgesehen sind. Die Ansteuerung der Reinigungsvorrichtung kann auch von einer entsprechend ausgebildeten Maschinensteuerung der Waage durchgeführt werden.

Aus der US2005/0109580A1 ist eine Reinigungsvorrichtung für ein Transport- oder Förderband beschrieben, welche am unteren Trum des Transportgurts, welcher um zwei Walzen geführt ist, angeordnet ist. Diese Vorrichtung ist insbesondere geeignet zur Reinigung von Transportbändem, wie sie an Kassen von Geschäften vorhanden sind. Mittels einer Steuereinheit wird die Funktion der Reinigungsvorrichtung so angesteuert, dass nach einer Aktivierung, die entweder automatisch oder mittels eines Detektorsignals erfolgen kann, Reinigungselemente mit dem unteren Trum des Förderbands in Kontakt gebracht werden. Des Weiteren werden weitere Komponenten, wie eine Benetzungsvorrichtung und eine Trockenvorrichtung in geeigneter Weise angesteuert.

Schließlich ist aus der US 6,135,268 ein Reinigungsverfahren für den Transportgurt eines Förderbands bekannt, wobei während dessen Betriebs Verunreinigungen auf dem Gurt detektiert und dann ggf. der Antrieb so angesteuert wird, dass durch geeignete Stopp- und Bewegungsumkehrvorgänge die Verunreinigungen auf dem Gurt beseitigt werden.

Der Erfindung liegt daher die Aufgabe zugrunde, eine Transportwaage, insbesondere einen Wägeförderer mit einem Transportband, zu schaffen, welche eine einfache und sichere Reinigung, auch durch ungeschultes Personal, ermöglicht.

Die Erfindung löst diese Aufgabe mit den Merkmalen der Patentansprüche 1 oder 2.

Die Erfindung geht von der Erkenntnis aus, dass es in jeder Hinsicht vorteilhaft ist, wenn die Transportwaage zusätzlich zu einem oder mehreren Wägebetriebsmodi einen Reinigungsmodus aufweist, in welchem die Funktionen der Transportwaage nach einem vorgegebenen Reinigungsmodus-Funktionsmuster so gesteuert werden, dass eine Gefährdung von Bedienpersonen und/oder eine Beschädigung der Transportwaage bei einer manuell durchgeführten Reinigung der Transportwaage verringert oder vermieden wird.

Das Überführen der Transportwaage in den Reinigungsmodus kann durch die Steuereinrichtung der Transportwaage selbst erfolgen; beispielsweise dadurch, dass die Steuereinrichtung in vorbestimmten zeitlichen Abständen oder zu vorgegebenen Zeitpunkten oder dann, wenn die Steuereinrichtung die Beendigung einer Serie von Wägevorgängen ermittelt, selbsttätig in den Reinigungsmodus schaltet. Selbstverständlich kann die Steuereinrichtung jedoch auch auf Anforderung, beispielsweise durch das Drücken eines mit der Steuereinrichtung verbundenen oder von dieser umfassten Schalters oder durch das Zuführen eines externen Signals, in den Reinigungsmodus überführt werden.

Die Steuereinrichtung ist vorzugsweise so ausgestaltet, dass ein Überführen in den Reinigungsmodus nur in zulässigen Betriebszuständen bzw. nur aus bestimmten zulässigen Betriebszuständen heraus möglich ist. Insbesondere kann das Überführen in den Reinigungsmodus nur dann zugelassen werden, wenn die Transportwaage keine gültigen Wägungen durchführen soll.

Nach einer Ausgestaltung der Erfindung können ein oder mehrere Reinigungsmodus-Funktionsmuster in einem Speicherbereich eines Speichers der Steuereinrichtung abgelegt sein, wobei im Fall mehrerer Reinigungsmodus-Funktionsmuster das für den Reinigungsmodus vorgegebene Reinigungsmodus-Funktionsmuster auswählbar ist. Das Auswählen des jeweils geeigneten, vorgegebenen Reinigungsmodus-Funktionsmusters kann durch die Steuereinrichtung selbst oder auch durch das Zuführen eines entsprechenden Signals von einer übergeordneten Steuereinrichtung erfolgen.

Erfindungsgemäß sind gemäß Anspruch 1 Mittel zur Erfassung des Drehmoments von Antriebsmitteln der Fördereinrichtung vorgesehen, deren Drehmomentsignal der Steuereinrichtung zugeführt ist. Das vorgegebene Reinigungsmodus-Funktionsmuster ist dann so gewählt, dass die Steuereinrichtung die Antriebsmittel der Fördereinrichtung im Reinigungsmodus so ansteuert, dass eine vorgegebene Sicherheitsschranke für das Drehmoment, das heißt ein maximal zulässiges Drehmoment, nicht überschritten wird. Diese erfindungsgemäße Möglichkeit erfasst selbstverständlich auch Ausführungsformen, bei denen Teile der Steuereinrichtung in einen entsprechenden Antrieb integriert sind. Beispielsweise kann der Antrieb selbst Mittel zur Erfassung des Drehmoments und Steuermittel umfassen, die den Antrieb in verschiedene Betriebsmodi schalten können. In diesem Fall kann der verbleibende Teil der Steuereinrichtung dem im Antrieb enthaltenen Teil der Steuereinrichtung ein Signal zuführen, welches lediglich den Wert für das maximal zulässige Drehmoment beinhaltet. Dieser Wert kann beispielsweise auch als Digitalwert übermittelt werden. Die im Antrieb enthaltenen Teile der Steuereinrichtung können diesen Wert dann verwenden, um den Antrieb mit einem entsprechenden maximal möglichen Drehmoment anzusteuern. Auf diese Weise kann gewährleistet werden, dass durch die Wahl eines entsprechend niedrigen, maximal zulässigen Werts für das Drehmoment eine Gefährdung von Bedienpersonen weitestgehend ausgeschlossen, jedenfalls jedoch drastisch reduziert wird. In gleicher Weise kann hierdurch selbstverständlich auch eine Beschädigung von Teilen der Transportwaage, beispielsweise des Antriebs, vermieden werden. Wird beispielsweise das Förderband zu Zwecken der Reinigung kurzzeitig manuell blockiert, so versucht der Antriebsmotor in einem Reinigungsmodus mit diesem Reinigungsmodus-Funktionsmuster nicht durch einen entsprechend hohen Antriebsstrom, im Extremfall durch einen unzulässig hohen Antriebsstrom, eine Bewegung zu erzwingen.

Gemäß Anspruch 2 verfügt die Transportwaage erfindungsgemäß auch über eine Eingreifschutzeinrichtung, beispielsweise eine oder mehrere Lichtschranken, welche ein "Eingreif"-Signal erzeugt und der Steuereinrichtung zuführt, wenn die Eingreifschutzeinrichtung das Eingreifen einer Bedienperson in einen von der Eingreifschutzeinrichtung überwachten Gefährdungsbereich der Fördereinrichtung detektiert und/oder das Öffnen einer Schutzabdeckung für die Fördereinrichtung detektiert. Derartige Eingreifschutzeinrichtungen sind bei Produktionsmaschinen bekannt und dienen üblicherweise dazu, die Produktionsmaschine insgesamt oder ausgewählte, bewegte Teile stillzusetzen, wenn die Steuereinrichtung ein "Eingreif"-Signal detektiert. Bei der erfindungsgemäßen Transportwaage führt das Detektieren eines "Eingreif"-Signals jedoch nicht zu einem Stillsetzen oder stromlos Schalten der Fördereinrichtung. Hierdurch kann bei bestimmten Antriebsarten ein Kalibrieren von Weg- oder Winkelsensoren entfallen und es wird ermöglicht, eine Bewegung der Fördereinrichtung bei aktivem Reinigungsmodus durchzuführen.

Das Detektieren eines "Eingreif"-Signals kann erfindungsgemäß auch dazu verwendet werden, um das gerade aktive Reinigungsmodus-Funktionsmuster zu verändern oder ein anderes von mehreren gespeicherten Reinigungsmodus-Funktionsmustern auszuwählen.

Nach unterschiedlichen Ausgestaltungen der Erfindung können das eine oder die mehrere vorgegebenen Reinigungsmodus-Funktionsmuster eine oder mehrere der folgenden zusätzlichen Funktionalitäten umfassen:
(a) Die Antriebsmittel der Fördereinrichtung können mit einer vorgegebenen Geschwindigkeit angetrieben werden. Die Geschwindigkeit wird man dabei vorzugsweise so wählen, dass bewegte Elemente keine Gefährdung für eine Bedienperson darstellen oder dass die Bewegungsgeschwindigkeit die Reinigung erleichtert, beispielsweise durch das Wegschleudern von Verschmutzungen.
(b) Die Antriebmittel der Fördereinrichtung können mit einer vorgegebenen Bewegungsrichtung angetrieben werden. Diese Funktionalität ermöglicht es, die Bewegungsrichtung eines Transportbands bzw. einer beliebigen Fördereinrichtung im Reinigungsmodus gegenüber dem Wägebetriebsmodus umzukehren oder zu ändern.
(c) Die Antriebsmittel der Fördereinrichtung können hinsichtlich Geschwindigkeit und/oder Bewegungsrichtung nach einem vorgegebenen zeitlichen Ablauf angetrieben werden. Dieses Reinigungsmodus-Funktionsmuster ermöglicht beispielsweise das Durchfahren eines bestimmten Geschwindigkeitsprofils für ein bewegtes Element einer Fördereinrichtung, einschließlich eines möglichen Umkehrens der Bewegungsrichtung, wie beispielsweise ein Vor- und Zurückfahren eines Transportbands oder ein Hin- und Herbewegen eines Greif- oder Schiebearms.
(d) Die Antriebsmittel der Fördereinrichtung können so angesteuert werden, dass nach Wegfall eines ein bewegtes Element bremsenden oder eines die Bewegung eines bewegten Elements stoppenden Moments bzw. nach Wegfall einer entsprechenden Kraft die Bewegung nach dem vorgegebenen Reinigungs-Funktionsmuster automatisch wieder aufgenommen wird. Hierdurch kann verhindert werden, dass beispielsweise bei einem manuellen Stoppen eines bewegten Elements der gesamte Reinigungsvorgang sofort gestoppt wird und erneut manuell gestartet werden muss.
(e) Die Antriebmittel der Fördereinrichtung können so angesteuert werden, dass ein oder mehrere bewegte Elemente in eine Reinigungsposition bewegt werden. Die Reinigungsposition kann dabei so gewählt sein, dass eine leichte Zugänglichkeit der zu reinigenden Teile gewährleistet ist.
(f) Weiterhin können auch Mittel zum Abdichten der Wägezelle, insbesondere im Bereich der Lasteinleitung, aktiviert werden. Diese Maßnahme kann insbesondere das Eindringen von Feuchtigkeit und/oder von Reinigungsmitteln in empfindliche Bereiche der Wägezelle verhindern.
(g) Weist die Transportwaage eine ansteuerbare Überlastsicherung für die Wägezelle auf, so kann diese aktiviert werden. Beispielsweise kann durch Blockieren der Bewegung des Lastaufnehmers der Wägezelle eine Zerstörung der Wägezelle durch unzulässig hohe Lastkräfte (beispielsweise wenn eine Bedienperson - in unzulässiger Weise - das Förderband eines Wägeförderers betritt) vermieden werden.
(h) Schließlich können auch bestimmte elektrische oder elektronische Baugruppen, insbesondere Baugruppen zur Erfassung und/oder Auswertung der Gewichtskraft, stromlos geschaltet werden. Hierdurch wird die Zerstörung dieser Baugruppen durch Feuchtigkeit oder Reinigungsmittel vermieden. Baugruppen, die für das Durchführen der gewünschten Funktionen bei aktivem Reinigungsmodus erforderlich sind, können selbstverständlich dabei nicht stromlos geschaltet werden; dies gilt zumindest für die Zeiträume, in denen die betreffenden Baugruppen ihre Funktionalität in den Reinigungsmodus einbringen müssen.

Nach der bevorzugten Ausführungsform der erfindungsgemäßen Transportwaage liefert die Steuereinrichtung im Reinigungsmodus, beispielsweise aus eichrechtlichen Gründen, keine gültigen Gewichtswerte. Dies kann entweder so geschehen, dass die Steuereinrichtung im Rcinigungsmodus generell keine Gewichtswerte ermittelt oder während eines Reinigungsvorgangs ermittelte Gewichtswerte als ungültig gekennzeichnet ausgibt.

Weitere Ausgestaltungen der Erfindung ergeben sich aus den Unteransprüchen.

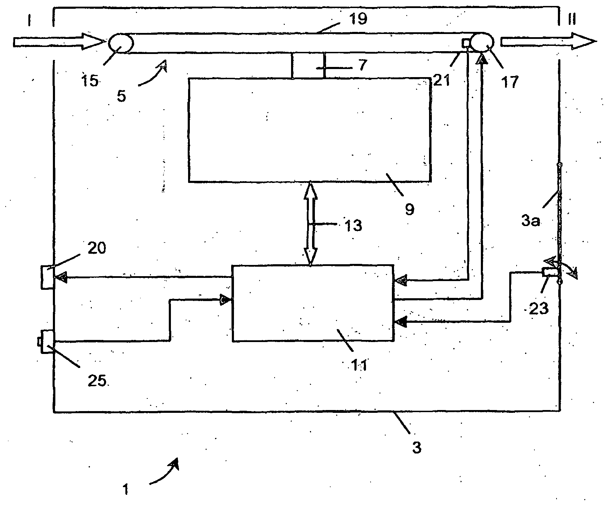

Die Erfindung wird nachfolgend anhand eines in der Zeichnung dargestellten Ausführungsbeispiels näher erläutert.

Die einzige Figur zeigt eine rein schematische Darstellung einer Ausgestaltung eines erfindungsgemäßen Wägeförderers.

Der Wägeförderer 1 umfasst ein im Wesentlichen geschlossenes Gehäuse 3, in welchem alle wesentlichen Komponenten des Wägeförderers 1 vorgesehen sind, insbesondere ein Förderband 5, welches den Lastaufnehmer 7 einer Wägezelle 9 beaufschlagt und eine Steuereinrichtung 11.

Die Wägezelle 9 ist mit der Steuereinrichtung 11 über eine oder mehrere Datenleitungen 13 verbunden, die auch als Kommunikationsbus ausgebildet sein können.

Das Förderband 5 weist in an sich bekannter Weise einen um zwei Rollen 15, 17 geführten Transportgurt 19 auf. Die Rolle 17 ist mittels eines nicht näher dargestellten Antriebs, beispielsweise eines Elektromotors, angetrieben. An der angetriebenen Rolle 17 bzw. am Antrieb für diese Rolle ist ein Drehmomentsensor 21 angeordnet, dessen Sensorsignal der Steuereinrichtung 11 zugeführt ist. Der Drehmomentsensor 21 kann selbstverständlich auch in den Antrieb, beispielsweise einen Elektromotor, integriert sein. Die Steuereinrichtung 11 steuert den (nicht dargestellten) Antrieb für die angetriebene Rolle 17 je nach Betriebsmodus in der gewünschten Art und Weise an.

Selbstverständlich kann auch ein Teil der Steuereinrichtung 11, dem das Signal des Drehmomentsensors 21 zugeführt ist und welcher die eigentliche Ansteuerung des Antriebs ausführt, mit in den Antrieb integriert sein. Diesem Teil der Steuereinrichtung 11 kann dann vom verbleibenden Teil der Steuereinrichtung lediglich der gewünschte Betriebsmodus für den Antrieb mitgeteilt werden. Die Verbindung zwischen diesen beiden Teilen der Steuereinrichtung 11 kann dann, beispielsweise über einen Kommunikationsbus, erfolgen.

Der in der Figur dargestellte Wägeförderer 1 weist des Weiteren eine Gehäuseklappe 3a auf, die beispielsweise für Reinigungszwecke geöffnet, insbesondere nach außen geklappt, werden kann. Die geschlossene Stellung der Gehäuseklappe oder Schutzabdeckung 3a wird mittels eines Endschalters 23 detektiert. Das Signal des Endschalters 23 ist ebenfalls der Steuereinrichtung 11 zugeführt. Auf diese Weise kann die Steuereinheit 11 eine geöffnete Gehäuseklappe 3a detektieren.

An der Außenseite des Gehäuses 3 ist des Weiteren ein Schalter 25 vorgesehen, dessen Signal der Steuereinrichtung 11 zugeführt ist, bzw, welcher mit der Steuereinrichtung 11 so verbunden ist, dass diese die Schalterstellung detektieren kann. Der Schalter 25 kann selbstverständlich auf beliebige Weise ausgebildet sein, beispielsweise als Taster.

Im normalen Wägebetriebsmodus wird dem Wägeförderer 1 zu wiegendes Gut eingangsseitig zugeführt, mittels des Förderbands 5 durch das Gehäuse 3 des Wägeförderers 1 hindurchbewegt und ausgangsseitig wieder abgegeben. Das Zuführen bzw. Abführen des zu wiegenden Guts ist mit den Pfeilen I (eingangseitig) bzw. II (ausgangseitig) symbolisiert.

Solange sich das zu wiegende Gut auf dem Transportgurt 19 des Förderbands 5 befindet, kann dessen Gewicht (nach dem Abwarten von Einschwingvorgängen) ermittelt werden.

Soll eine Reinigung des Wägeförderers 1, insbesondere des Förderbands 5, erfolgen, so kann die Steuereinrichtung 11 durch Betätigen des Schalters 25 in einen Reinigungsmodus überführt werden. Das Betätigen des Schalters 25 kann durch eine nicht dargestellte Sicherheitseinrichtung gesichert sein, beispielsweise mittels einen Zahlenschlosses, eines Kartenlesers oder dergleichen.

Ein aktiver Reinigungsmodus kann von der Steuereinrichtung 11 auch für Bedienpersonen oder eine übergeordnete Steuereinheit erkennbar gemacht werden. Hierzu kann eine von der Steuereinrichtung ansteuerbare Anzeigeeinheit 20 aktiviert werden. Die Anzeigeeinheit kann selbstverständlich auch direkt von der Stellung des Schalter 25 abhängig sein, und einen aktiven Reinigungsmodus dann anzeigen, wenn der Schalter 25 die betreffende Schalterstellung aufweist. Einer übergeordneten Steuereinheit kann ein entsprechendes Signal übermittelt werden, welches auf einen aktiven Reinigungsmodus hinweist.

Selbstverständlich kann die Steuereinrichtung 11 das Überführen in den Reinigungsmodus auch selbsttätig vornehmen, beispielsweise zu vorgegebenen Zeitpunkten oder nach Ablauf bestimmter Zeitintervalle.

Anstelle eines Schalters 25 kann der Steuereinrichtung 11 auch ein externes Signal (nicht dargestellt) zugeführt sein. Auf diese Weise kann die Steuereinrichtung 11 beispielsweise von einer übergeordneten Steuereinheit in den Reinigungsmodus versetzt werden.

Im Reinigungsmodus kann die Steuereinrichtung 11 ein bestimmtes Verhalten des Wägeförderers 1, insbesondere des Förderbands 5, nach einem vorgegebenen Reinigungsmodus-Funktionsmuster auslösen. Das für den Reinigungsmodus vorgegebene Reinigungsmodus-Funktionsmuster kann in einem Speicherbereich eines Speichers der Steuereinrichtung 11 abgelegt sein. Selbstverständlich kann das Reinigungsmodus-Funktionsmuster auch "fest verdrahtet" in der Steuereinrichtung 11 realisiert sein.

Während der Endschalter 23 bzw. das der Steuereinrichtung 11 zugeführte Signal, das eine "Geöffnet"-Stellung der Gehäuseklappe 3a signalisiert, im normalen Wägebetriebsmodus des Wägeförderers 1 zu einem sofortigen Stoppen des Wägeförderers 1, insbesondere des Förderbands 5, führt, kann ein derartiges generelles Abschalten im Reinigungsmodus nicht erwünscht sein.

Beispielsweise kann das Reinigungsmodus-Funktionsmuster so gewählt sein, dass bei aktivem Reinigungsmodus das Förderband 5 mit geringerer Geschwindigkeit weiterläuft, als dies im Wägebetriebsmodus der Fall ist. Zusätzlich oder alternativ zu einer geringeren Geschwindigkeit kann das maximale Drehmoment, welches der Antrieb der angetriebenen Rolle 17 im Reinigungsmodus erzeugt, gegenüber dem Drehmoment im Wägebetriebsmodus reduziert sein, um Verletzungen einer Bedienperson zu vermeiden bzw. die Verletzungsgefahr drastisch zu reduzieren.

Das Reinigungsmodus-Funktionsmuster kann vielfältig ausgestaltet sein. Neben der Reduzierung der Bewegungsgeschwindigkeit oder auch der Reduzierung des maximal zulässigen Antriebs-Drehmoments kann auch eine Umkehr der Bewegungsrichtung erfolgen. Auch ein vorgegebener zeitlicher Ablauf eines bestimmten Geschwindigkeitsprofils, einschließlich der Umkehr von Bewegungsrichtungen, ist möglich.

Hierdurch kann vermieden werden, dass beispielsweise der Transportgurt 19 für Reinigungszwecke demontiert werden muss. Insbesondere durch das vorzugsweise langsame Weiterbewegen des Transportgurts 19 kann - beispielsweise mittels eines Dampfstrahlersjeder Bereich des Transportgurts 19 erreicht werden. Durch unterschiedliche Geschwindigkeiten und oder Bewegungsrichtungen können auch Schmutzpartikel vom Transportgurt 19 bzw. den Rollen 15, 17 weggeschleudert werden.

Allgemein gesprochen, können die Antriebsmittel - im dargestellten Ausführungsbeispiel der Antrieb der Rolle 17 - bei aktivem Reinigungsmodus so angesteuert werden, dass die ausgeführten Bewegungen bzw. die Richtung und die Geschwindigkeit (gegebenenfalls nach einem vorgegebenen zeitlichen Profil) den Reinigungseffekt begünstigen und gleichzeitig eine Gefahr von Verletzungen für die Bedienperson oder die Gefahr einer Beschädigung von Teilen der Transportwaage bzw. des Wägeförderers 1 vermieden oder jedenfalls drastisch reduziert wird.

Die Steuereinrichtung 11 kann nach dem für den Reinigungsmodus vorgegebenen Reinigungsmodus-Funktionsmuster auch nicht benötigte elektrische oder elektronische Baugruppen oder Schaltkreise stromlos schalten. Hierbei kann es sich beispielsweise um die in der Wägezelle 9 enthaltene oder von dieser umfasste Elektronik handeln. Damit wird gleichzeitig erreicht, dass der Wägeförderer 1 bei aktivem Reinigungsmodus keine Gewichtswerte ausgibt, so dass nicht die Gefahr besteht, dass ungültige Gewichtswerte erzeugt und unkorrekt interpretiert werden.

Sollte während des Reinigungsmodus das Erzeugen und Bereitstellen von Gewichtswerten weiterhin möglich sein, beispielsweise bei entsprechend beschaffenem Reinigungsmodus-Funktionsmuster, so kann das Reinigungsmodus-Funktionsmuster vorsehen, dass die Steuereinrichtung 11 diejenigen Gewichtswerte als ungültige Gewichtswerte kennzeichnet, die bei aktivem Reinigungsmodus erzeugt werden.

Eine weitere Möglichkeit zur Gestaltung des Reinigungsmodus-Funktionsmusters besteht darin, eine Überlastsicherung für die Wägezelle zu aktivieren. Im dargestellten Ausführungsbeispiel könnte eine Vorrichtung vorgesehen sein, welche im aktivierten Zustand das Förderband 19 an der Unterseite unterstützt und so das Einleiten einer Lastkraft auf den Lastaufnehmer 7 blockiert oder die Lastkraft begrenzt. Hierdurch wird während des Reinigungsmodus verhindert, dass die Wägezelle 9 durch (unzulässig) hohe Lastkräfte beschädigt wird.

Darüber hinaus kann eine nicht näher dargestellte Einrichtung zum Abdichten der Wägezelle, insbesondere im Bereich des Lastaufnehmers 7, vorgesehen sein, die im Reinigungsmodus aktiviert werden kann. Hierdurch kann beispielsweise das Eindringen von Feuchtigkeit und/oder Reinigungsmitteln in die Wägezelle vermieden werden.

Abschließend sei darauf hingewiesen, dass die Erfindung nicht auf die in der einzigen Figur dargestellte Ausführungsform begrenzt ist. Von der Erfindung erfasst werden sämtliche Transportwaagen, die wenigstens eine Wägezelle und eine Fördereinrichtung beliebiger Art aufweisen, mit welcher das zu wiegende Gut zur Wägezelle zugeführt oder von dieser abgeführt wird. Hierbei kann es sich somit auch um eine statische Waage handeln, deren Wägeplattform das zu wiegende Gut mittels eines Schiebers oder eines Roboterarms zugeführt wird. In all diesen Fällen lässt sich durch das Vorsehen eines geeigneten Reinigungsmodus-Funktionsmusters das Verhalten bei aktivem Reinigungsmodus so beeinflussen, dass der Reinigungsvorgang begünstigt und eine Verletzung von Bedienpersonen bzw. eine Beschädigung der Transportwaage vermieden wird.

## Patentansprüche

1. Transportwaage, insbesondere Wägeförderer mit einem Transportband,
(a) mit einer Wägezelle (9) und einer Fördereinrichtung (5) für zu wiegendes Gut, insbesondere Stückgut, zum Zuführen und Abführen des Guts zur und von der Wägezelle (9),
(b) mit einer Steuereinrichtung (11) zur Steuerung der Funktionen der Transportwaage (1),
**dadurch gekennzeichnet,**
(c) **dass** die Steuereinrichtung (11) in einen Reinigungsmodus überführbar ist,
(d) **dass** die Steuereinrichtung (11) im Reinigungsmodus die Funktionen der Transportwaage (1) nach einem vorgegebenen Reinigungsmodus-Funktionsmuster steuert,
(e) **dass** das Reinigungsmodus-Funktionsmuster so ausgebildet ist, dass eine Gefährdung von Bedienpersonen und/oder eine Beschädigung der Transportwaage (1) bei einer manuell durchgeführten Reinigung der Transportwaage verringert oder vermieden wird, und
(f) **dass** Mittel (21) zur Erfassung des Drehmoments von Antriebsmitteln der Fördereinrichtung (5) vorgesehen sind, deren Drehmomentsignal der Steuereinrichtung (11) zugeführt ist und dass das vorgegebene Reinigungsmodus-Funktionsmuster so gewählt ist, dass die Steuereinrichtung (11) die Antriebsmittel der Fördereinrichtung (5) im Reinigungsmodus so ansteuert, dass eine vorgegebene Sicherheitsschranke für das Drehmoment nicht überschritten wird.

2. Transportwaage, insbesondere Wägeförderer mit einem Transportband,
(a) mit einer Wägezelle (9) und einer Fördereinrichtung (5) für zu wiegendes Gut, insbesondere Stückgut, zum Zuführen und Abführen des Guts zur und von der Wägezelle (9),
(b) mit einer Steuereinrichtung (11) zur Steuerung der Funktionen der Transportwaage (1),
**dadurch gekennzeichnet,**
(c) **dass** die Steuereinrichtung (11) in einen Reinigungsmodus überführbar ist,
(d) **dass** die Steuereinrichtung (11) im Reinigungsmodus die Funktionen der Transportwaage (1) nach einem vorgegebenen Reinigungsmodus-Funktionsmuster steuert,
(e) **dass** das Reinigungsmodus-Funktionsmuster so ausgebildet ist, dass eine Gefährdung von Bedienpersonen und/oder eine Beschädigung der Transportwaage (1) bei einer manuell durchgeführten Reinigung der Transportwaage verringert oder vermieden wird und
(f) **dass** eine Eingreifschutzeinrichtung (23) für die Fördereinrichtung (5) vorgesehen ist, welche ein "Eingreif"-Signal erzeugt und der Steuereinrichtung (11) zuführt, wenn die Eingreifschutzeinrichtung (23) das Eingreifen einer Bedienperson in einen von der Eingreifschutzeinrichtung (23) überwachten Gefährdungsbereich der Fördereinrichtung (5) und/oder das Öffnen einer Schutzabdeckung (3a) für die Fördereinrichtung (5) detektiert, wobei die Steuereinrichtung (11) im Wägebetriebsmodus der Transportwaage (1) die Fördereinrichtung (5) stillsetzt oder in ihrer Funktion beeinflusst, wenn sie ein "Eingreif"-Signal detektiert, und dass die Steuereinrichtung (11) bei aktivem Reinigungsmodus die Fördereinrichtung (5) nicht stillsetzt, wenn ein "Eingreif"-Signal detektiert wird.

3. Transportwaage nach Anspruch 2, **dadurch gekennzeichnet, dass** die Steuereinrichtung (11) bei Detektieren eines "Eingreif"-Signals das vorgegebene Reinigungsmodus-Funktionsmuster verändert oder ein anderes von mehreren gespeicherten Reinigungsmodus-Funktionsmustern auswählt.

4. Transportwaage nach einem der vorhergehenden Ansprüche, **dadurch gekennzeichnet, dass** ein oder mehrere Reinigungsmodus-Funktionsmuster in einem Speicherbereich eines Speichers der Steuereinrichtung (11) abgelegt sind, wobei im Fall mehrerer Reinigungsmodus-Funktionsmuster das für den Reinigungsmodus vorgegebene Reinigungsmodus-Funktionsmuster auswählbar ist.

5. Transportwaage nach einem der vorhergehenden Ansprüche, **dadurch gekennzeichnet, dass** der Reinigungsmodus mittels eines mit der Steuereinrichtung (11) verbundenen Schalters (25) oder mittels eines der Steuereinrichtung (11) zugeführten Signals aktivierbar ist.

6. Transportwaage nach einem der vorhergehenden Ansprüche, **dadurch gekennzeichnet, dass** die Steuereinrichtung (11) den Reinigungsmodus nach einer vorbestimmten Zeit oder einer vorbestimmten Anzahl von Wägevorgängen aktiviert.

7. Transportwaage nach einem der vorhergehenden Ansprüche, **dadurch gekennzeichnet, dass** das eine oder die mehreren vorgegebenen Reinigungsmodus-Funktionsmuster eine oder mehrere der folgenden Funktionalitäten umfassen:
(a) Antriebsmittel der Fördereinrichtung (5) werden mit einer vorgegebenen Geschwindigkeit angetrieben;
(b) Antriebsmittel der Fördereinrichtung (5) werden mit einer vorgegebenen Bewegungsrichtung angetrieben;
(c) Antriebsmittel der Fördereinrichtung (5) werden hinsichtlich Geschwindigkeit und/oder Bewegungsrichtung nach einem vorgegebenen zeitlichen Ablauf angetrieben;
(d) Antriebsmittel der Fördereinrichtung werden so angesteuert, dass nach Wegfall eines bremsenden oder die Bewegung stoppenden Moments oder nach Wegfall einer entsprechenden Kraft die Bewegung nach dem vorgegebenen Funktionsmuster selbsttätig wieder aufgenommen wird;
(e) Antriebsmittel der Fördereinrichtung werden so angesteuert, dass ein oder mehrere bewegte Elemente in eine Reinigungsposition bewegt werden;
(f) Mittel zum Abdichten der Wägezelle (9), insbesondere im Bereich der Lasteinleitung, werden aktiviert;
(g) Aktivieren einer Überlastsicherung für die Wägezelle (9);

8. Transportwaage nach einem der vorhergehenden Ansprüche, **dadurch gekennzeichnet, dass** die Steuereinrichtung (11) im Reinigungsmodus keine gültigen Gewichtswerte ausgibt.

9. Transportwaage nach einem der vorhergehenden Ansprüche, **dadurch gekennzeichnet, dass** die Fördereinrichtung ein Förderband (5) ist.

## Claims

1. Conveyor scale, in particular a weighing conveyor with a conveyor belt,
(a) with a load cell (9) and a conveying device (5) for goods to be weighed, in particular piece goods, for the supply and removal of the goods to and from the load cell (9),
(b) with a control device (11) for controlling the functions of the conveyor scale (1),
**characterised in that**
(c) the control device (11) can be transferred to a cleaning mode,
(d) in the cleaning mode the control device (11) controls the functions of the conveyor scale (1) according to a predetermined cleaning mode function pattern, and
(e) the cleaning mode function pattern is configured so that a risk to operators and/or damage to the conveyor scale (1) is reduced or avoided in the case of cleaning of the conveyor scale that is carried out manually.
(f) means (21) for detecting the torque of drive means of the conveying device (5) are provided, the torque signal of which is supplied to the control device (11) and that the predetermined cleaning mode function pattern is selected such that the control device (11) activates the drive means of the conveying device (5) in cleaning mode in such a way that a predetermined safety barrier for the torque is not exceeded.

2. Conveyor scale, in particular a weighing conveyor with a conveyor belt,
(a) with a load cell (9) and a conveying device (5) for goods to be weighed, in particular piece goods, for the supply and removal of the goods to and from the load cell (9),
(b) with a control device (11) for controlling the functions of the conveyor scale (1),
**characterised in that**
(c) the control device (11) can be transferred to a cleaning mode,
(d) in the cleaning mode the control device (11) controls the functions of the conveyor scale (1) according to a predetermined cleaning mode function pattern, and
(e) the cleaning mode function pattern is configured so that a risk to operators and/or damage to the conveyor scale (1) is reduced or avoided in the case of cleaning of the conveyor scale that is carried out manually.
(f) an intervention protection device (23) is provided for the conveying device (5), which produces an "intervention" signal and supplies it to the control device (11) if the intervention protection device (23) detects the intervention of an operator in a hazardous area of the conveying device (5) that is monitored by the intervention protection device (23) and/or the opening of a protective cover (3a) for the conveying device (5), wherein the control device (11) stops the conveying device (5) in weighing operation mode of the conveyor scale (1) or influences its function if it detects an "intervention" signal, and that the control device (11) does not stop the conveying device (5) in active cleaning mode if an "intervention" signal is detected.

3. Conveyor scale according to claim 2, **characterised in that** the control device (11), on detection of an "intervention" signal, changes the predetermined cleaning mode function pattern or selects another of several stored cleaning mode function patterns.

4. Conveyor scale according to one of the preceding claims, **characterised in that** one or more cleaning mode function patterns are stored in a storage area of a memory of the control device (11), wherein, in the case of several cleaning mode function patterns, the cleaning mode function pattern predetermined for the cleaning mode can be selected.

5. Conveyor scale according to one of the preceding claims, **characterised in that** the cleaning mode can be activated by means of a switch (25) connected to the control device (11) or by means of a signal supplied to the control device (11).

6. Conveyor scale according to one of the preceding claims, **characterised in that** the control device (11) activates the cleaning mode after a preset time or a preset number of weighing processes.

7. Conveyor scale according to one of the preceding claims, **characterised in that** the one or more predetermined cleaning mode function patterns comprise one or more of the following functions:
(a) drive means of the conveying device (5) are driven at a predetermined speed;
(b) drive means of the conveying device (5) are driven in a predetermined direction of movement;
(c) drive means of the conveying device (5) are driven in respect of speed and/or direction of movement according to a predetermined time sequence;
(d) drive means of the conveying device are activated in such a way that, following the loss of a braking or movement-stopping torque or following the loss of a corresponding force, the movement is resumed autonomously according to the predetermined function pattern;
(e) drive means of the conveying device are activated in such a way that one or more moved elements are moved into a cleaning position;
(f) means for sealing the load cell (9), in particular in the area of the load introduction, are activated;
(g) activation of an overload safety device for the load cell (9);

8. Conveyor scale according to one of the preceding claims, **characterised in that** the control device (11) does not emit any valid weight values in cleaning mode.

9. Conveyor scale according to one of the preceding claims, **characterised in that** the conveying device is a conveyor belt (5) .

## Revendications

1. Balance de transport, plus particulièrement convoyeur à pesage avec une bande de transport,
(a) avec une cellule de pesage (9) et un dispositif de convoyage (5) pour un article à peser, plus particulièrement un article par pièces, pour l'alimentation et l'évacuation de l'article vers et hors de la cellule de pesage (9),
(b) avec un dispositif de commande (11) pour le contrôle des fonctions de la balance de transport (1),
**caractérisée en ce que**
(c) le dispositif de commande (11) peut être mis dans un mode de nettoyage;
(d) le dispositif de commande (11) en mode de nettoyage contrôle les fonctions de la balance de pesage (1) selon un modèle de fonctionnement de mode de nettoyage, et
(e) le modèle de fonctionnement de mode de nettoyage est conçu de façon à ce qu'un risque pour les utilisateurs et/ou un risque d'endommagement de la balance de transport (1) soit réduit ou évité lors d'un nettoyage manuel de la balance de transport
(f) des moyens (21) de mesure du couple de rotation de moyens d'entraînement du dispositif de convoyage (5) sont prévus, dont le signal de couple de rotation est envoyé vers le dispositif de commande (11) et **en ce que** le modèle de fonctionnement de mode de nettoyage prédéterminé est sélectionné de façon à ce que le dispositif de commande (11) contrôle les moyens d'entraînement du dispositif de convoyage (5) en mode de nettoyage de façon à ce qu'une barrière de sécurité prédéterminée pour le couple de rotation ne soit pas dépassée.

2. Balance de transport, plus particulièrement convoyeur à pesage avec une bande de transport,
(a) avec une cellule de pesage (9) et un dispositif de convoyage (5) pour un article à peser, plus particulièrement un article par pièces, pour l'alimentation et l'évacuation de l'article vers et hors de la cellule de pesage (9),
(b) avec un dispositif de commande (11) pour le contrôle des fonctions de la balance de transport (1),
**caractérisée en ce que**
(c) le dispositif de commande (11) peut être mis dans un mode de nettoyage,
(d) le dispositif de commande (11) en mode de nettoyage contrôle les fonctions de la balance de pesage (1) selon un modèle de fonctionnement de mode de nettoyage, et
(e) le modèle de fonctionnement de mode de nettoyage est conçu de façon à ce qu'un risque pour les utilisateurs et/ou un risque d'endommagement de la balance de transport (1) soit réduit ou évité lors d'un nettoyage manuel de la balance de transport
(f) un dispositif de protection contre les interventions (23) est prévu pour le dispositif de convoyage (5), qui génère un signal « intervention » et l'envoie vers le dispositif de commande (11) lorsque le dispositif de protection contre les interventions (23) détecte l'intervention d'un utilisateur dans une zone à risque du dispositif de convoyage (5) surveillée par le dispositif de protection contre les interventions (23) et/ou l'ouverture d'un couvercle de protection (3a) pour le dispositif de convoyage (5), le dispositif de commande (11) immobilisant, en mode de pesage de la balance de transport (1), le dispositif de convoyage (5) et l'influençant dans son fonctionnement lorsqu'il détecte un signal « intervention » et **en ce que** le dispositif de commande (11) n'immobilise par le dispositif de convoyage (5) lorsque le mode de nettoyage est activé et lorsqu'un signal « intervention » est détecté.

3. Balance de transport selon la revendication 2, **caractérisée en ce que** le dispositif de commande (11) modifie, lors de la détection d'un signal « intervention », le modèle de fonctionnement de mode de nettoyage prédéterminé ou sélectionne un autre parmi les plusieurs modèles de fonctionnement de mode de nettoyage enregistrés.

4. Balance de transport selon l'une des revendications précédentes, **caractérisée en ce qu'**un ou plusieurs modèles de fonctionnement de mode de nettoyage sont enregistrés dans une zone de la mémoire du dispositif de commande (11), le modèle de fonctionnement prédéterminé pour le mode de nettoyage puisse être sélectionné, s'il existe plusieurs modèles de fonctionnement de mode de nettoyage.

5. Balance de transport selon l'une des revendications précédentes, **caractérisée en ce que** le mode de nettoyage peut être activé au moyen d'un interrupteur (25) relié au dispos de commande (11) ou au moyen d'un signal envoyé au dispositif de commande (11).

6. Balance de transport selon l'une des revendications précédentes, **caractérisée en ce que** le dispositif de commande (11) active le mode de nettoyage après un temps prédéterminé ou après un nombre prédéterminé de processus de pesage.

7. Balance de transport selon l'une des revendications précédentes, **caractérisée en ce qu'**un ou plusieurs modèles de fonctionnement de mode de nettoyage prédéterminés comprennent une ou plusieurs des fonctionnalités suivantes :
(a) les moyens d'entraînement du dispositif de convoyage (5) sont entraînés avec une vitesse prédéterminée ;
(b) les moyens d'entraînement du dispositif de convoyage (5) sont entraînés dans une direction de déplacement prédéterminée ;
(c) les moyens d'entraînement du dispositif de convoyage (5) sont entraînés après l'écoulement d'un temps prédéterminé en ce qui concerne la vitesse et/ou la direction de déplacement ;
(d) les moyens d'entraînement du dispositif de convoyage sont commandés de façon à ce que, après la disparition d'un couple freinant ou arrêtant le mouvement ou après la disparition d'une force correspondante, le mouvement soit repris automatiquement selon le modèle de fonctionnement prédéterminé ;
(e) les moyens d'entraînement du dispositif de convoyage sont commandés de façon à ce qu'un ou plusieurs éléments déplacés sont déplacés vers une position de nettoyage ;
(f) des moyens d'étanchéité de la cellule de pesage (9), plus particulièrement au niveau de l'application des charges, sont activés ;
(g) activation d'une protection anti-surcharge pour la cellule de pesage (9) ;

8. Balance de transport selon l'une des revendications précédentes, **caractérisée en ce que** le dispositif de commande (11) en mode de nettoyage n'envoie aucune valeur de poids valable.

9. Balance de transport selon l'une des revendications précédentes, **caractérisée en ce que** le dispositif de convoyage est un convoyeur à bande (5).
